# Europäisches Patentamt

## European Patent Office

## Office européen des brevets

(19)

(11) Veröffentlichungsnummer: **0 245 681**
**B1**

(12) **EUROPÄISCHE PATENTSCHRIFT**

(45) Veröffentlichungstag der Patentschrift: **06.06.90**

(51) Int. Cl.⁵: **B 65 G 35/00**

(21) Anmeldenummer: **87106059.6**

(22) Anmeldetag: **25.04.87**

(54) **Senkrechtförderanlage für Stückgut.**

(30) Priorität: **10.05.86 DE 3615880**

(43) Veröffentlichungstag der Anmeldung:
**19.11.87 Patentblatt 87/47**

(45) Bekanntmachung des Hinweises auf die
Patenterteilung:
**06.06.90 Patentblatt 90/23**

(84) Benannte Vertragsstaaten:
**AT BE CH DE ES FR GB GR IT LI NL SE**

(56) Entgegenhaltungen:
**DE-A-1 929 890**
**DE-A-1 935 185**
**FR-A-2 193 760**
**GB-A-1 516 120**
**US-A-3 447 670**

**PATENT ABSTRACTS OF JAPAN, Band 8, Nr. 16
(M-270)1453r, 24. Januar 1984; & JP-A-58 177
821 (SANEI KIKI KOGYO K.K.) 18-10-1983**

(73) Patentinhaber: **TRAPO-Stumpf GmbH
Industriestrasse 1
D-4423 Gescher 2 (Hochmoor) (DE)**

(72) Erfinder: **Weinecke, Christian
Worringer Strasse 78
D-4000 Düsseldorf (DE)**

(74) Vertreter: **Patentanwaltsbüro Cohausz & Florack
Postfach 14 01 20 Schumannstrasse 97
D-4000 Düsseldorf 1 (DE)**

Courier Press, Leamington Spa, England.

# Beschreibung

Die Erfindung betrifft eine Förderanlage für Teile, insbesondere Stückgut, mit mehreren übereinander angeordneten Förderplattformen, die die Teile nach oben und/oder unten befördern, und mit mehreren in senkrechter Richtung feststehenden Böden als Auf- und Abgabestationen, die parallel neben den Förderplattformen übereinander angeordnet sind und deren Abstände voneinander den Abständen der Förderplattformen ensprechen.

Es sind Senkrechtförderanlagen, insbesondere Etagenförderer wie Stückgutumlaufaufzüge—DE—A 1 935 185—bekannt, deren Förderplattformen um Umlauf Auf- und Abgabestationen bedienen. Diese Anlagen sind aufgrund ihrer doppelten nebeneinander angeordneten Reihe von Förderplattenformen aufwendig und platzraubend. Darüber hinaus sind Senkrechtförderanlagen für Stückgut bekannt, die mit einer Plattform als Etagenförderer eine untere und obere Etagenplattform miteinander verbinden. Diese Anlagen haben meist die Aufgabe, zwei in verschiedenem Niveau liegende Stetigförderer miteinander zu verbinden.

Aufgabe der Erfindung ist es, eine Förderanlage der eingangs genannten Art so zu verbessern, daß innerhalb der Förderanlage die zu transportierenden Teile gespeichert werden können.

Diese Aufgabe wird erfindungsgemäß dadurch gelöst, daß die Abstände zwischen den Förderplattformen gleich sind und daß etwa in Höhe der Böden in einer horizontalen Ebene hin- und herbewegliche Transportvorrichtungen vorgesehen sind, durch die die Teile von den Förderplattformen auf die Böden und in umgekehrter Richtung von den Böden auf die Förderplattformen transportierbar sind.

Eine solche Förderanlage läßt es zu, daß die zu transportierenden Teile zwischengespeichert werden, ehe sie weitertransportiert werden. Eine Zwischenspeicherung ist für die verschiedensten Arbeitsabläufe und Transportaufgaben von größtem Vorteil.

Darüber hinaus kann die Förderanlage bei Eingabe der Teile von einem Ende die Teile nicht nur zum zweiten Ende transportieren, sondern sie kann nach der Zwischenspeicherung die Teile auch wieder zum Eingabeende zurückfördern, so daß die Anlage als reiner Speicher verwendbar ist. Die Speicherkapazität ist beliebig vergrößerbar, so daß nicht nur eine hohe Flexibilität, sondern auch eine große Anpassungsfähigkeit erreichbar ist. Ferner weist die Anlage eine hohe Funktionssicherheit bei einfacher Konstruktion und geringen Außenabmessungen auf.

Eine besonders sichere Arbeitsweise bei einfacher Konstruktion wird dann erreicht, wenn die Transportvorrichtungen von Schiebern gebildet sind. Hierzu wird auch vorgeschlagen, daß zumindest eine der die Teile von den Böden herunter bewegenden Transportvorrichtungen eine angetriebene Rollenbahn ist.

Besonders vorteilhaft ist es, wenn der unterste und/oder oberste Boden oder mehrere Böden von einer Waagerechttransportvorrichtung, insbesondere einem Förderband gebildet ist (sind). Alternativ wird vorgeschlagen, daß an dem untersten und/oder obersten Boden eine Waagerechttransportvorrichtung, insbesondere ein Förderband angeschlossen ist.

Die Speicherkapazität der Anlage ist auf einfache Weise dadurch erhöhbar, daß neben den feststehenden Böden in gleicher Höhe Lagerflächen angeordnet sind.

Für ein vorteilhaftes Verfahren unter Verwendung einer Förderanlage der erfindungsgemäßen Art wird vorgeschlagen, daß alle Förderplattformen sich gemeinsam abwechselnd auf- und abbewegen um die Höhe des Abstandes zweier Böden voneinander. Hierbei können die von den Förderplattformen von einem Boden zum nächsten Boden transportierten Teile durch die Transportvorrichtungen von der Förderplattform auf den genannten nächsten Boden bewegt werden und dort zumindest so lange verbleiben, bis die benachbarte Förderplattform diesen Boden erreicht hat, um dann durch die Transportvorrichtung auf die in gleicher Höhe befindliche Förderplattform bewegt zu werden.

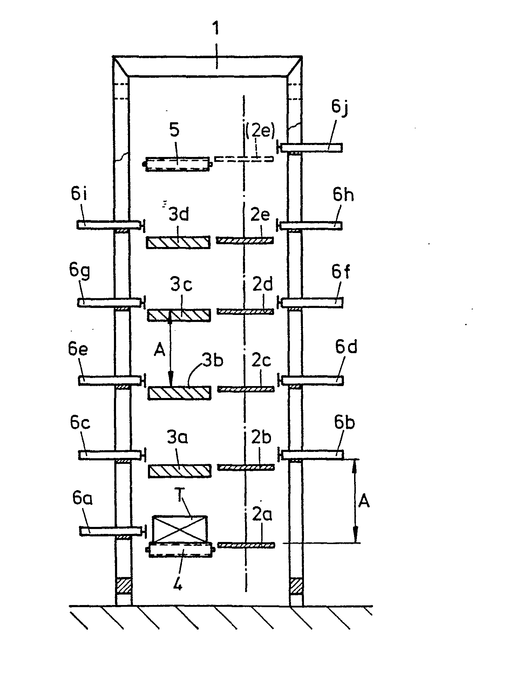

Ein Ausführungsbeispiel der Erfindung ist in der Zeichnung in einer senkrechten Ansicht dargestellt und wird im folgenden näher beschrieben.

In einem Gerüst 1 sind mehrere waagerechte Förderplattformen 2 in gleichbleibenden Abständen übereinander angeordnet und an einem oder mehreren senkrechten Fördermitteln befestigt, die alle Plattformen 2 gemeinsam um den Abstand, und damit die senkrechte Strecke A, abwechselnd auf- und abwärts bewegen. Alle in der Zeichnung dargestellten fünf Plattformen 2 werden somit gleichzeitig um den Abstand A taktweise auf- und abbewegt. In Höhe der Plattformen 2 befinden sich z.B. vier Böden 3 als Auf- und Abgeflächen, die wiederum senkrecht übereinander angeordnet sind, im jeweiligen Abstand A. Unterhalb des untersten Bodens 3 befindet sich wiederum im Abstand A ein Aufgabeförderer 4 und oberhalb des obersten Bodens ein Abgabeförderer 5. Der Aufgabeförderer 4 kann auch von einem Abgabeförderer und der Abgabeförderer 5 von einem Aufgabeförderer gebildet werden. Diese Förderer können Förderbänder oder Rollenbahnen sein.

Die neben den Plattformen 2 angeordneten Böden 3 bilden somit Lagerflächen, auf denen die zu transportierenden Teile, insbesondere Stückgut, von den Böden geschoben werden. Die Größe der Böden 3, insbesondere ihre Breite, kann der der Plattformen 2 entsprechen und ist beliebig erweiterbar. Insbesondere können neben den Böden 3 in gleicher Höhe auf einer der drei verbleibenden Seiten oder mehreren dieser Seiten weitere Böden angeordnet werden, um dort noch mehr Zwischenspeicherplatz zu schaffen.

Das taktweise Auf- und Abwärtsbewegen aller Plattformen 2 gemeinsam geschieht stets nur um die Höhe A, so daß z.B. die unterste Plattform 2 nur von dem Aufgabeförderer 4 um den Betrag A angehoben wird, wobei alle anderen Plattformen mit angehoben werden und danach die unterste Plattform wieder nach unten um die Höhe A bewegt wird. Es werden somit alle Förderplattformen gemeinsam abwechselnd um die Strecke A auf- und abbewegt, so daß ein geringer Konstruktionsaufwand erforderlich ist.

Um die Teile, insbesondere das Stückgut T von den Plattformen 2 auf die Böden 3 bzw. die Förderer 4, 5 als auch in umgekehrter Richtung zu bewegen, sind am Gerüst 1 zahlreiche Transportvorrichtungen 6 befestigt, die durch Schieber die Teile horizontal bewegen. Diese Schieber können durch Zylinder-Kolben-Aggregate hydraulisch, elektromechanisch oder pneumatisch angetrieben werden. Alternativ oder zusätzlich können aber auch die Plattformen 2 und/oder die Böden 3 angetriebene Rollenbahnen aufweisen.

Die Anlage arbeitet wie folgt:

Stückgut T, wie z.B. Kartons, werden vom Aufgabeförderer 4 herantransportiert und durch den untersten Schieber 6a vom Förderer 4 auf die unterste Plattform 2a geschoben. Danach bewegen sich alle Plattformen 2a bis 2e gemeinsam nach oben, so daß jetzt die Plattform 2a in Höhe des Bodens 3a¹ steht. Dort wird das Stückgut durch den Schieber 6b auf den Boden 3a geschoben, und dann bewegen sich alle Plattformen wieder nach unten. Das inzwischen vom Aufgabeförderer 4 herbeitransportierte Teile wird jetzt vom Schieber 6a auf die Plattform 2a geschoben, und gleichzeitig wird das auf dem Boden 3a befindliche Teil durch den Schieber 6c auf die Plattform 2b geschoben. Danach bewegen sich wieder alle Plattformen nach oben, und von der Plattform 2a wird das Teil bzw. Stückgut auf den Boden 3a geschoben und das auf der Plattform 2b befindliche Teil auf den Boden 3b. Jetzt werden wieder alle Plattformen nach unten bewegt, und das inzwischen auf dem Aufgabeförderer 4 angekommene Teil wird zusammen mit den übrigen Teilen auf die Böden 2a bis 2c geschoben. Auf diese Art wird taktweise weiter verfahren, so daß alle Böden nach und nach belegt sind und dann mit dem obersten Teil der Abgabeförderer 5 beliefert wird.

In einer Alternative kann statt des Abgabeförderers 5 ein weiterer Boden 3 angeordnet sein und die Anlage dadurch entleert werden, daß nach Belegen aller Böden rückwärts verfahren wird, d.h. die Plattformen 2a bis 2e werden dazu benutzt, taktweise die Anlage zu leeren, indem der Förderer 4 zum Abgabeförderer wird. In einer weiteren Alternative kann in Höhe des Aufgabeförderers 4 auf der anderen Seite der Plattform 2a ein Abgabeförderer vorgesehen sein, der für einen Abtransport sorgt.

**Patentansprüche**

1. Förderanlage für Teile (T), insbesondere Stückgut, mit mehreren übereinander angeordneten Förderplattformen, (2, 2a—2e), die die Teile nach oben und/oder unten befördern, und mit mehreren in senkrechter Richtung feststehenden Böden (3, 3a—3d, 4, 5) als Auf- und Abgabestationen, die parallel neben den Förderplattformen übereinander angeordnet sind und deren Abstände voneinander den Abständen der Förderplattformen entsprechen, dadurch gekennzeichnet, daß die Abstände zwischen den Förderplattformen gleich sind und daß etwa in Höhe der Böden (3, 3a—3d, 4, 5) in einer horizontalen Ebene hin- und herbewegliche Transportvorrichtungen (6, 6a—6j) vorgesehen sind, durch die die Teile (T) von den Förderplattformen (2, 2a—2e) auf die Böden und in umgekehrter Richtung von den Böden auf die Förderplattformen transportierbar sind.

2. Förderanlage nach Anspruch 1, dadurch gekennzeichnet, daß die Transportvorrichtungen (6, 6a—6j) von Schiebern gebildet sind.

3. Förderanlage nach Anspruch 1 oder 2, dadurch gekennzeichnet, daß zumindest eine der die Teile (T) von den Böden (3, 3a—3d, 4, 5) herunter bewegenden Transporvorrichtungen (6, 6a—6j) eine angetriebene Rollenbahn ist.

4. Förderanlage nach einem der vorherigen Ansprüche, dadurch gekennzeichnet, daß der unterste und/oder oberste Boden oder mehrere Böden von einer Waagerechttransportvorrichtung (4, 5), insbesondere einem Förderband, gebildet ist (sind).

5. Förderanlage nach einem der Ansprüche 1 bis 3, dadurch gekennzeichnet, daß an dem untersten und/oder oberen Boden eine Waagerechttransportvorrichtung, insbesondere ein Förderband, angeschlossen ist.

6. Förderanlage nach einem der vorherigen Ansprüche, dadurch gekennzeichnet, daß neben den feststehenden Böden (3, 3a—3d) in gleicher Höhe Lagerflächen angeordnet sind.

7. Verfahren unter Verwendung einer Förderanlage nach einem der vorherigen Ansprüche, dadurch gekennzeichnet, daß alle Förderplattformen (2, 2a—2e) sich gemeinsam abwechselnd auf- und abbewegen um die Höhe (A) des Abstandes zweier Böden (3, 3a—3d) voneinander.

8. Verfahren nach Anspruch 7, dadurch gekennzeichnet, daß die von den Förderplattenformen (2, 2a—2e) von einem Boden (3, 3a—3d, 4, 5) zum nächsten Boden transportierten Teile (T) durch die Transportvorrichtungen (6, 6a—6j) von den Förderplattformen (2, 2a—2e) auf den genannten nächsten Boden bewegt werden und dort zumindest so lange verbleiben, bis die benachbarte Förderplattform diesen Boden erreicht hat, um dann durch die Transportvorrichtung auf die in gleicher Höhe befindliche Förderplattform bewegt zu werden.

**Revendications**

1. Installatin de transport pour pièces (T), en particulier de charges isolées avec plusieurs plateformes de transport implantées de manière superposée (2, 2a—2e), transportant les pièces vers le bas et/ou vers le haut, et avec plusieurs plateaux verticalement fixes (3, 3a—3d, 4, 5) servant de station de dépôt ou de prélèvement, parallèlement superposés à proximité des plateformes de transport et dont les écartements les uns par rapport aux autres correspondent aux écartements des plateformes de transport, caractérisée en ce que les écartements entre les plateformes de transport sont égaux et en ce que des dispositifs de transport mobiles alternativement (6, 6a—6j) par le biais desquels les pièces (T) son transportables des plateformes de transport (2, 2a—2e) vers les plateaux et dans le sens inverse des plateaux vers les plateformes de transport sont prévus dans un plan horizontal situé approximativement à la hauteur des plateaux (3, 3a—3d, 4, 5).

2. Installation de transport selon la revendication 1, caractérisée en ce que les dispositifs de transport (6, 6a—6j) sont constitués par des tiroirs.

3. Installation de transport selon la revendication 1 ou 2, caractérisée en ce que l'un des dispositifs au moins du dispositif de transport (6, 6a—6j) transportant les pièces (T) des plateaux (3, 3a—3d, 4, 5) est une voie à rouleaux entraînée.

4. Installation de transport selon l'une des revendications précédentes, caractérisée en ce que le plateaux inférieur et/ou supérieur ou plusieurs plateaux horizontaux est (sont) formé(s) par un dispositif de transport horizontal (4, 5), en particulier par un convoyeur à bande.

5. Installation de transport selon l'une des revendications 1 à 3, caractérisée en ce que qu'un dispositif de transport horizontal, en particulier un convoyeur à bande, est raccordé au plateau inférieur et/ou supérieur.

6. Installation de transport selon l'une des revendications précédentes, caractérisée en ce que des surfaces de stockage sont implantées à proximité et à hauteur égale des plateaux fixes (3, 3a—3d).

7. Méthode utilisant une installation de transport selon l'une des revendications précédentes, caractérisée en ce que toutes les plateformes de transport (2, 2a—2e) peuvent se déplacer ensemble alternativement vers le haut ou vers le bas de la hauteur (A) de l'écartement existant entre deux plateaux (3, 3a—3d).

8. Méthode selon la revendication 7, caractérisée en ce que les pièces (T) transportées d'un plateau à l'autre (3, 3a—3d, 4, 5) sont déplacées vers le plateau précité à partir des plateformes de transport (2, 2a—2e) par les dispositifs de transport (6, 6a—6j) et qu'elles demeurent sur ledit plateau au moins jusqu'au moment où la plateforme de transport voisine a atteint ce plateau afin de pouvoir être déplacée ensuite par le dispositif de transport vers la plateforme de transport située à la même hauteur.

## Claims

1. Handling system for parts (T), in particular parcels, with several vertically arranged conveying platforms (2, 2a—2e) which convey the parts in an upward and/or downward direction, and with several fixed floors in the vertical direction (3, 3a—3d, 4, 5) serving as recipient and transfer stations which are vertically arranged parallel and adjacent to the conveying platforms at intervals from one another which correspond to the intervals between the conveying platforms, characterized in that the intervals between the conveying platforms are identical and that, approximately at the level of the floors (3, 3a—3d, 4, 5) are provided transfer devices (6, 6a—6j) which move back and forth in a horizontal plane, by means of which transfer devices (6, 6a—6j) the parts (T) are transferred from the conveying platforms (2, 2a—2e) on to the floors and, in the reverse direction, from the floors on to the conveying platforms.

2. Handling system in accordance with Claim 1, characterized in that the transfer devices (6, 6a—6j) take the form of pushers.

3. Handling system in accordance with Claims 1 or 2, characterized in that at least one of the transfer devices (6, 6a—6j) moving the parts (T) from the floors (3, 3a—3d, 4, 5) is a driven roller conveyor.

4. Handling system in accordance with one of the preceding claims, characterized in that the bottom-most and/or top-most floor or several floors, take(s) the form of a horizontal transfer device (4, 5), and in particular a conveyor belt.

5. Handling system in accordance with one of Claims 1 to 3, characterized in that adjoined to the bottom-most and/or the top-most floor is a horizontal transfer device, in particular a conveyor belt.

6. Handling system in accordance with one of the preceding claims, characterized in that adjoining the fixed floors (3, 3a—3d) are storage areas at the same level.

7. Process employing a handling system in accordance with one of the preceding claims, characterized in that all the conveying platforms (2, 2a—2e) move together in alternating upward and downward cycles by the distance (A) of the interval between the two floors (3, 3a—3d).

8. Process in accordance with Claim 7, characterized in that the parts (T) moved by the conveying platform (2, 2a—2e) from one floor (3, 3a—3d, 4, 5) to the next floor are transferred by the transfer devices (6, 6a—6j) from the conveying platforms to the associated next floor where said parts (T) remain at least until the next conveyor platform in sequence has reached this floor, whereupon the parts (T) are transferred by the transfer device on to the conveying platform located at the same level.

EP  0 245 681  B1

1